# EUROPEAN PATENT APPLICATION

(11) **EP 3 667 495 A1**
(43) Date of publication of application: **17.06.2020**
(21) Application number: 18844234.7
(22) Date of filing: 10.08.2018
(51) Int. Cl.: G06F 9/48

(54) **TASK SCHEDULING METHOD, APPARATUS AND DEVICE, AND STORAGE MEDIUM**

(30) Priority: 11.08.2017 CN 201710685266
(71) Applicant: ZTE Corporation, Shenzhen, Guangdong 518057 (CN)
(72) Inventor: LI, Rui, Shenzhen Guangdong 518057 (CN)
(74) Representative: Ricker, Mathias
(86) International application number: PCT/CN2018/100046
(87) International publication number: WO 2019/029721

(57) **Abstract**

Disclosed is a task scheduling method. The method includes: determining a scheduling step-size of each task according to a task attribute of the each task; determining a scheduling value of the each task according to the scheduling step-size of the each task; and scheduling and executing a task corresponding to each of scheduling values in an order of all the scheduling values. Further disclosed are a task scheduling apparatus, a task scheduling device and a storage medium.

## Description

This application claims priority to a Chinese patent application No. 201710685266.8 filed on August 11, 2017, disclosure of which is incorporated herein by reference in its entirety.

### TECHNICAL FIELD

The present disclosure relates to the field of communications, for example, to a task scheduling method, apparatus and device, and a storage medium.

### BACKGROUND

An intelligent network is an overlay network which is introduced in a traditional mobile switching network in order to provide value-added services (one or more kinds of new services) more flexibly, conveniently, economically and effectively. The whole mobile network is a network structure composed of an original switching layer and an overlay intelligent layer, where the switching layer is responsible for basic service calling and connection functions, and the intelligent layer controls and implements some complex value-added services. Common services of the intelligent network include a prepaid service, a mobile zone service, a charging service and the like.

With the rapid development of Internet applications, a manner for access to a management interface of services of the intelligent network has changed dramatically. The manner is no longer limited to a traditional computer access manner (such as a World Wide Web portal), various terminal access manners such as a mobile phone and a portable Android device (PAD) are increasingly recognized. Background applications are also adapting to this change, and each function is independent and modularized to avoid the strong coupling between modules and the repeated development and test of the same function. One or more tasks are generally created for a request submitted by a user through different channels, and task identifiers are generated, written into a task table, and returned to the channels. A task scheduling program processes the tasks and sends messages to the channels after the tasks are processed to notify processing results, or the channels actively query execution results according to the task identifiers.

Although the related task processing mechanism solves the problem of code reuse for the same function of different channels, task processing efficiency, a response speed, a system processing capability, system overheads, maintenance overheads and other aspects still need to be improved in a complex multi-task-concurrence system.

### SUMMARY

The present disclosure provides a task scheduling method, apparatus and device, and a storage medium, so as to improve at least the related task scheduling processing efficiency.

In an embodiment, the present disclosure provides a task scheduling method. The method includes steps described below.

A scheduling step-size of each task is determined according to a task attribute of the each task.

A scheduling value of the each task is determined according to the scheduling step-size of the each task.

The task corresponding to each of scheduling values is scheduled and executed according to an order of all the scheduling values.

In an embodiment, the step of determining the scheduling step-size of the each task according to the task attribute of the each task includes steps described below.

A priority of the each task is determined according to the task attribute of the each task.

The scheduling step-size of the each task is determined according to the priority of the each task.

In an embodiment, a descending order of priorities corresponds to an ascending order of scheduling step-sizes.

In an embodiment, the step of determining the scheduling step-size of the each task according to the task attribute of the each task includes a step described below.

The scheduling step-size of the each task is matched in a preset mapping table according to the task attribute of the each task, where the mapping table is a table of a mapping relationship between the task attribute and the scheduling step-size.

In an embodiment, the step of determining the scheduling value of the each task according to the scheduling step-size of the each task includes a step described below.

The scheduling value of the each task is calculated by the following formula:
the scheduling value = task creation time + the scheduling step-size.

In an embodiment, the scheduling step-size is determined by a number of tasks within a time period of the scheduling step-size and execution time of each of the tasks.

In an embodiment, the step of scheduling and executing the task corresponding to the each of the scheduling values according to the order of all the scheduling values includes steps described below.

Each task and the scheduling value of the each task are written into a task queue.

All the scheduling values in the task queue are ordered, and the task corresponding to each of the scheduling values is scheduled and executed according to the order of all the scheduling values.

In an embodiment, the step of ordering all the scheduling values in the task queue, and scheduling and executing the task corresponding to each of the scheduling values according to the order of all the scheduling values includes steps described below.

All the scheduling values in the task queue are ordered in an ascending order.

The task corresponding to each of the scheduling values is scheduled and executed in the ascending order of all the scheduling values.

In an embodiment, the task queue is in a form of a single queue.

In an embodiment, before according to the task attribute of each task, the method further includes acquiring a task attribute of at least one task.

The step of acquiring the task attribute of the at least one task includes steps described below. At least one task request is received.

A task attribute of a task included in each of the at least one task request is parsed and acquired.

The task attribute includes a task type and a task channel.

In an embodiment, the present disclosure further provides a task scheduling apparatus, including a scheduling value calculation module and a task scheduling and execution module.

The scheduling value calculation module is configured to determine a scheduling step-size of each task according to a task attribute of the each task, and determine a scheduling value of the each task according to the scheduling step-size of the each task.

The task scheduling and execution module is configured to schedule and execute a task corresponding to each of scheduling values according to an order of all the scheduling values.

In an embodiment, the apparatus further includes a task receiving module.

The task receiving module is configured to receive at least one task request, extract a task attribute of a task included in each of the at least one task request, and send the task attribute of the task included in each of the at least one task request to the scheduling value calculation module.

In an embodiment, the apparatus further includes a mapping table configuration module.

The mapping table configuration module is configured to configure a task priority and a scheduling step-size corresponding to each task attribute, for the scheduling value calculation module to calculate the scheduling value of the each task.

The scheduling value calculation module is further configured to receive the task attribute of the each task sent by the task receiving module, determine the task priority and the scheduling step-size from the mapping table configuration module according to the task attribute of the each task, and determine the scheduling value of the each task according to the scheduling step-size of the each task.

In an embodiment, the present disclosure further provides a task scheduling device, including a processor and a memory, where the memory is configured to store computer programs, and the processor is configured to execute the computer programs to implement the method described above.

In an embodiment, the present disclosure further provides a computer-readable storage medium, which is configured to store computer programs which, when executed by at least one processor, implement the method described above.

### BRIEF DESCRIPTION OF DRAWINGS

FIG. 1 is a flowchart of a task scheduling method according to an embodiment of the present disclosure;
FIG. 2A is a structural diagram of a task scheduling apparatus according to an embodiment of the present disclosure;
FIG. 2B is a structural diagram of another task scheduling apparatus according to an embodiment of the present disclosure; and
FIG. 3 is a structural diagram of a task scheduling device according to an embodiment of the present disclosure.

### DETAILED DESCRIPTION

### Embodiment one

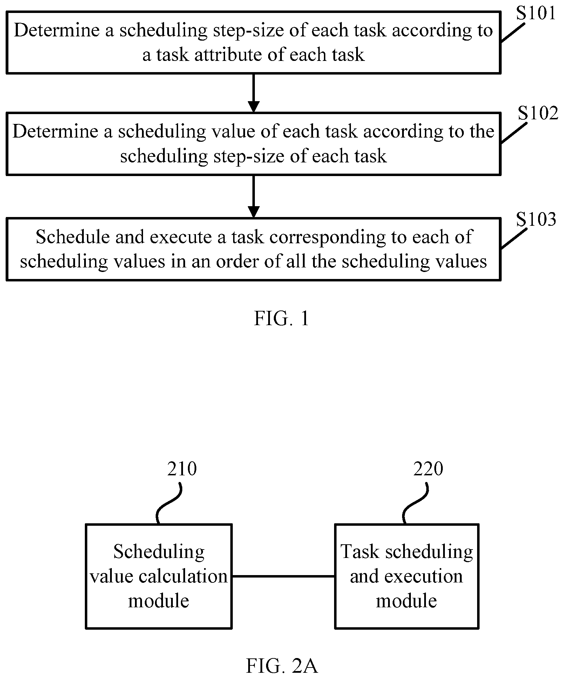

As shown in FIG. 1, an embodiment of the present disclosure provides a task scheduling method, including steps described below.

In S101, a scheduling step-size of each task is determined according to a task attribute of the each task.

In S102, a scheduling value of the each task is determined according to the scheduling step-size of the each task.

In S103, a task corresponding to each of scheduling values is scheduled and executed in an order of all the scheduling values.

The method in the embodiment of the present disclosure is used by a multi-task-concurrence system.

The method in the embodiment of the present disclosure may be widely applied to the field of scheduling tasks according to priorities, such as a ticketing system, an order processing system, and the like.

In the embodiment of the present disclosure, the scheduling step-size of the task is determined according to the task attribute of the task, the scheduling value of the task is determined according to the scheduling step-size, and the tasks are scheduled and executed according to their scheduling values, thereby effectively reducing implementation complexity of the related task scheduling method, effectively solving the problem of scheduling tasks according to priorities in the multi-task-concurrence system, and effectively improving task processing efficiency and a response speed.

On the basis of the above-mentioned embodiment, variants of the above-mentioned embodiment are proposed.

In an embodiment of the present disclosure, the step of determining the scheduling step-size of the each task according to the task attribute of the each task includes steps described below.

A priority of the each task is determined according to the task attribute of the each task.

The scheduling step-size of the each task is determined according to the priority of the each task.

In an embodiment, a descending order of priorities corresponds to an ascending order of scheduling step-sizes.

In an embodiment, the step of determining the scheduling step-size of the each task according to the task attribute of the each task includes a step described below.

The scheduling step-size of the each task is matched in a preset mapping table according to the task attribute of the each task, where the mapping table is a table of a mapping relationship between the task attribute and the scheduling step-size.

That is to say, as shown in table 1, a task-attribute-scheduling-step mapping table (simply referred to as the mapping table) records a correspondence between the task attribute, a task priority, and the scheduling step-size. In the embodiment of the present disclosure, the determination of the task priority is simplified by the mapping table, and the priorities are set more flexibly, so that maintenance overheads of a queue do not increase exponentially with an increase of the priorities.

**Table 1**

| Task Attribute 1 | Task Attribute 2 | ... | Task Attribute n | Scheduling Level/Priority | Scheduling step-size (on the order of 100 milliseconds) |
|---|---|---|---|---|---|
| Re-done | Web | ... | *** | One | 86400000 (one day) |
| Unexecuted | Mobile phone | ... | *** | Two | 172800000 (two days) |
| Being executed | Web | ... | *** | Three | 259200000 (three days) |
| Unexecuted | Web | ... | *** | Four | 345600000 (four days) |

In an embodiment of the present disclosure, a calculation formula of the scheduling value is described below.

The scheduling value = current system time (accurate to the order of 100 milliseconds) + scheduling step-size (accurate to the order of 100 milliseconds).

The calculation formula of the scheduling value in the embodiment of the present disclosure includes task creation time (current system time) and task priority information (scheduling step-size), thereby ensuring that a task with the highest priority and created first is scheduled first.

In an embodiment of the present disclosure, the scheduling step-size is determined by the number of tasks within a time period of the scheduling step-size and execution time of each of the tasks.

That is to say, in the embodiment of the present disclosure, the scheduling step-size corresponding to a task of each priority is the key to distinguishing between task priorities. The scheduling step-size should be set to ensure that all tasks of this priority can be executed within the time period of this scheduling step-size, so as to avoid skip scheduling. The scheduling step-size only affects a scheduling order of the task, and is independent of practical scheduling time of the task. The scheduling step-size may be configured in units of days (internally converted to the order of 100 milliseconds).

In an embodiment, the step of scheduling and executing the task corresponding to the each of the scheduling values in the order of all the scheduling values includes steps described below.

The each task and the scheduling value of the each task are written into a task queue.

All the scheduling values in the task queue are ordered, and the task corresponding to each of the scheduling values is scheduled and executed in the order of all the scheduling values.

That is to say, the task corresponding to the each of the scheduling values is scheduled and executed in an ascending order of the scheduling values.

In an embodiment, the task queue is in a form of a single queue.

As shown in FIG. 2A, an embodiment of the present disclosure provides a task scheduling apparatus, and the task scheduling apparatus includes a scheduling value calculation module 210 and a task scheduling and execution module 220.

The scheduling value calculation module 210 is configured to determine a scheduling step-size of each task according to a task attribute of the each task, and determine a scheduling value of the each task according to the scheduling step-size of the each task.

The task scheduling and execution module 220 is configured to schedule and execute the task corresponding to each of scheduling values in an order of all the scheduling values.

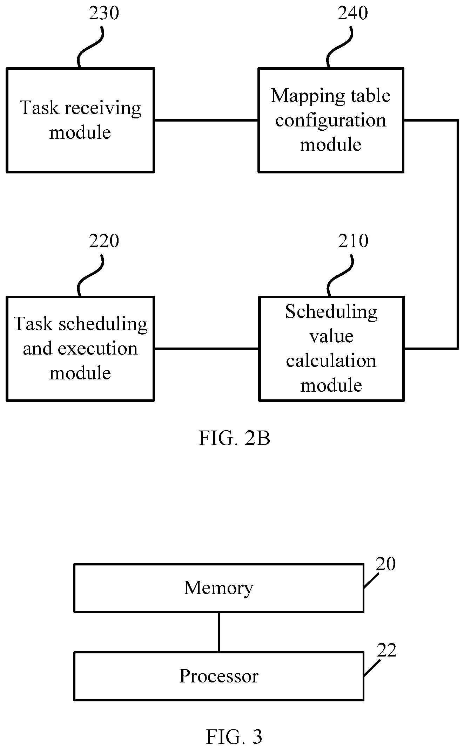

As shown in FIG. 2B, in an embodiment, the apparatus further includes a task receiving module 230.

The task receiving module 230 is configured to receive at least one task request, extract a task attribute of a task included in each of the at least one task request, and send the task attribute of the task included in each of the at least one task request to the scheduling value calculation module.

In an embodiment, the apparatus further includes a mapping table configuration module 240.

The mapping table configuration module 240 is configured to configure a task priority and a scheduling step-size corresponding to each task attribute, for the scheduling value calculation module to calculate the scheduling value of the each task.

The scheduling value calculation module 210 is further configured to receive the task attribute of the each task sent by the task receiving module, determine the task priority and the scheduling step-size from the mapping table configuration module according to the task attribute of the each task, and determine the scheduling value of the each task according to the scheduling step-size of the each task.

The embodiments of the present disclosure are described below in detail.

In the embodiments of the present disclosure, a single queue is used instead of multiple queues in the related art, and a scheduling step-size is introduced. A priority and a scheduling step-size of a task are determined according to multiple attributes of the task. As long as the scheduling step-size is large enough, the task can be ensured to be strictly scheduled according to the priority, and a low-priority task can be scheduled timely when all high-priority tasks are executed.

In an embodiment, the priority of the task and the corresponding scheduling step-size are determined by a task-attribute-scheduling-step mapping table; after the scheduling step-size of the task is acquired, a scheduling value of the task is calculated according to a calculation formula of the scheduling value, tasks are sequentially scheduled and executed in an ascending order of scheduling values. The priority of the task or a time order in which the tasks are created is not needed to be worried when the tasks are scheduled.

The embodiments of the present disclosure may be implemented in the form of software modules. For example, in the embodiments of the present disclosure, a task receiving module, a mapping table configuration module, a scheduling value calculation module, a task queue, and a task scheduling and execution module are mainly included.

The task receiving module is configured to receive a task request. The task request includes a task attribute such as a task type, a task channel (such as Web and an application (APP) of a mobile phone), and a task parameter. The task receiving module extracts the task attribute and sends the task attribute to the scheduling value calculation module to calculate the scheduling value.

The mapping table configuration module is configured to configure a task priority and a scheduling step-size corresponding to each task attribute for the scheduling value calculation module to calculate the scheduling value and support the joint determination of the task priority and the scheduling step-size by multiple task attributes. The scheduling step-size should be set to ensure that all tasks of the task priority can be executed within a time period of this scheduling step-size, so as to avoid skip scheduling. The scheduling step-size only affects a scheduling order of the task, and is independent of the practical scheduling time of the task. The scheduling step-size is suggested to be configured in units of days (internally converted to the order of 100 milliseconds).

The scheduling value calculation module is configured to determine the task priority and the scheduling step-size from the mapping table according to the task attribute, and calculate the scheduling value of the task according to the calculation formula of the scheduling value. The calculation formula of the scheduling value is described below.

The scheduling value = current system time (accurate to the order of 100 milliseconds) + scheduling step-size (accurate to the order of 100 milliseconds).

The task queue stores all unfinished tasks and sorts the tasks according to the scheduling values. A task with a smaller scheduling value has a higher priority and is scheduled earlier.

The task scheduling and execution module is configured to sequentially acquire a task from the task queue, execute the task, and return an execution result in the ascending order of the scheduling values.

On the basis of the above software modules, a task scheduling process in the embodiments of the present disclosure may include steps described below.
(1) The task priority and the scheduling step-size corresponding to the task attribute is determined according to a service requirement of the task, and a mapping relationship between the task attribute, the task priority and the scheduling step-size is configured by the mapping table configuration module.
(2) The task receiving module receives the task request, parses the task attribute, and sends the task attribute to the scheduling value calculation module.
(3) The scheduling value calculation module acquires the scheduling step-size of the task from the mapping table according to the task attribute. The scheduling value of the task is calculated according to the calculation formula of the scheduling value, and the task attribute, the task priority, and the scheduling value are written into the task queue.
(4) The task scheduling and execution module acquires a task with the smallest scheduling value from the task queue, and schedules and executes this task.

Compared with the related art, the method provided by the embodiments of the present disclosure can solve the problem of task scheduling priorities in a complex multi-priority multi-task real-time system. The introduction of the mapping table simplifies the determination of the task priority and enables the priorities to be set more flexibly, and maintenance overheads of the task queue do not increase exponentially with an increase of the priorities. A calculation method of the scheduling value of the task ensures that the task is strictly scheduled according to the priority. The scheduling value of the task is only generated before the task enters a scheduling queue without being dynamically adjusted and corrected, ensuring efficient task scheduling and improving task response time and processing efficiency.

An application example is used for describing the embodiments of the present disclosure.

A task scheduling process involved in this application example includes steps described below.

In step 1, a mapping table of priorities and scheduling step-sizes corresponding to task attributes is configured according to the classification of the task attributes.

In step 2, a task request is received, a task attribute is parsed, and step 3 is performed.

In step 3, a priority and a scheduling step-size are acquired by referring to the mapping table according to the task attribute, a scheduling value is calculated according to a calculation formula of the scheduling value, and step 4 is performed.

In step 4, the task attribute, and the priority and the scheduling value of a task are stored in a database task table.

In step 5, a task with the smallest scheduling value is acquired from the task table.

In step 6, it is determined whether the task exists. If the task exists, step 7 is performed. If the task does not exist, step 8 is performed.

In step 7, the task is executed and an execution result is returned.

In step 8, dormancy is performed for a period of time.

### Embodiment two

As shown in FIG. 3, an embodiment of the present disclosure provides a task scheduling device. The task scheduling device includes a memory 20 and a processor 22. The memory 20 is configured to store computer programs for task scheduling, and the processor 22 is configured to execute the computer programs to implement the method according to the embodiments described above.

In the embodiment of the present disclosure, a scheduling step-size of a task is determined according to a task attribute of the task, a scheduling value of the task is determined according to the scheduling step-size, and the task is scheduled to be executed according to the scheduling value, thereby effectively reducing implementation complexity of the existing task scheduling method, effectively solving the problem of scheduling tasks according to priorities in a multi-task-concurrence system, and improving task processing efficiency and a response speed.

In an embodiment, the processor 22 is configured to execute the computer programs to implement steps described below.

A scheduling step-size of each task is determined according to a task attribute of the each task.

A scheduling value of the each task is determined according to the scheduling step-size of the each task.

A task corresponding to each of scheduling values is scheduled and executed in an order of all the scheduling values.

In an embodiment, the step of determining the scheduling step-size of the each task according to the task attribute of the each task includes steps described below.

A priority of the each task is determined according to the task attribute of the each task.

The scheduling step-size of the each task is determined according to the priority of the each task.

A descending order of priorities corresponds to an ascending order of scheduling step-sizes.

In an embodiment, the step of determining the scheduling step-size of the each task according to the task attribute of the each task includes a step described below.

The scheduling step-size of the each task is matched in a preset mapping table according to the task attribute of the each task, where the mapping table is a table of a mapping relationship between the task attribute and the scheduling step-size.

In an embodiment, a calculation formula of the scheduling value is described below.

The scheduling value = task creation time + the scheduling step-size.

In an embodiment, the scheduling step-size is determined by the number of tasks within a time period of the scheduling step-size and execution time of each of the tasks.

In an embodiment, the step of scheduling and executing the task corresponding to the each of the scheduling values in the order of all the scheduling values includes steps described below.

The each task and the scheduling value of the each task are written into a task queue.

All the scheduling values in the task queue are ordered, and the task corresponding to the each of the scheduling values is scheduled and executed in the order of all the scheduling values.

In an embodiment, the step of ordering all the scheduling values in the task queue, and scheduling and executing the task corresponding to the each of the scheduling values in the order of all the scheduling values includes steps described below.

All the scheduling values in the task queue are ordered in an ascending order.

The task corresponding to the each of the scheduling values is scheduled and executed in the ascending order of all the scheduling values.

In an embodiment, the task queue is in a form of a single queue.

In an embodiment, before the scheduling step-size of the each task is determined according to the task attribute of the each task, the method further includes acquiring a task attribute of at least one task.

The step of acquiring the task attribute of the at least one task includes steps described below.

At least one task request is received.

A task attribute of a task included in each of the at least one task request is parsed and acquired.

The task attribute includes a task type and a task channel.

The embodiment of the present disclosure may be implemented by referring to embodiment one, and also have the corresponding technical effects.

### Embodiment three

An embodiment of the present disclosure provides a computer-readable storage medium, which is configured to store computer programs for task scheduling which, when executed by at least one processor, implement the method according to the embodiments described above.

In the embodiment of the present disclosure, the computer-readable storage medium may be a random access memory (RAM), a flash memory, a read-only memory (ROM), an erasable programmable read only memory (EPROM), an electrically erasable programmable read only memory (EEPROM), a register, a hard disk, a mobile hard disk, a compact disc read-only memory (CD-ROM), or any other forms of storage medium which are known in the art. A storage medium may be coupled to the processor such that the processor is able to read information from, and write information into, the storage medium; or the storage medium may be a component of the processor. The processor and the storage medium may be located in a specific integrated circuit.

The embodiment of the present disclosure may be implemented by referring to embodiment one and embodiment two, and also have the corresponding technical effects.

## Claims

1. A task scheduling method, comprising:
determining a scheduling step-size of each task according to a task attribute of each task;
determining a scheduling value of each task according to the scheduling step-size of each task; and
scheduling and executing the task corresponding to each of scheduling values according to an order of all the scheduling values.

2. The method of claim 1, wherein determining the scheduling step-size of each task according to the task attribute of each task comprises:
determining a priority of each task according to the task attribute of each task; and
determining the scheduling step-size of each task according to the priority of each task.

3. The method of claim 2, wherein a descending order of priorities corresponds to an ascending order of scheduling step-sizes.

4. The method of claim 1, wherein determining the scheduling step-size of each task according to the task attribute of each task comprises:
matching the scheduling step-size of each task in a preset mapping table according to the task attribute of each task;
wherein the mapping table is a table of a mapping relationship between the task attribute and the scheduling step-size.

5. The method of claim 1, wherein determining the scheduling value of each task according to the scheduling step-size of each task comprises:
calculating the scheduling value of each task by the following formula:
the scheduling value = task creation time + the scheduling step-size.

6. The method of claim 1, wherein the scheduling step-size is determined by a number of tasks within a time period of the scheduling step-size and execution time of each of the tasks.

7. The method of any one of claims 1 to 4, wherein scheduling and executing the task corresponding to each of the scheduling values according to the order of all the scheduling values comprises:
writing each task and the scheduling value of each task into a task queue; and
ordering all the scheduling values in the task queue, and scheduling and executing the task corresponding to each of the scheduling values according to the order of all the scheduling values.

8. The method of claim 7, wherein ordering all the scheduling values in the task queue, and scheduling and executing the task corresponding to each of the scheduling values according to the order of all the scheduling values comprises:
ordering all the scheduling values in the task queue in an ascending order; and
scheduling and executing the task corresponding to each of the scheduling values according to the ascending order of all the scheduling values.

9. The method of claim 7 or 8, wherein the task queue is in a form of a single queue.

10. The method of claim 1, before determining the scheduling step-size of each task according to the task attribute of each task, further comprising: acquiring a task attribute of at least one task;
wherein acquiring the task attribute of the at least one task comprises:
receiving at least one task request; and
parsing and acquiring a task attribute of a task included in each of the at least one task request;
wherein the task attribute comprises a task type and a task channel.

11. A task scheduling apparatus, comprising:
a scheduling value calculation module, which is configured to determine a scheduling step-size of each task according to a task attribute of each task, and determine a scheduling value of each task according to the scheduling step-size of each task; and
a task scheduling and execution module, which is configured to schedule and execute a task corresponding to each of scheduling values according to an order of all the scheduling values.

12. The apparatus of claim 11, further comprising: a task receiving module;
wherein the task receiving module is configured to receive at least one task request, extract a task attribute of a task included in each of the at least one task request, and send the task attribute of the task included in each of the at least one task request to the scheduling value calculation module.

13. The apparatus of claim 12, further comprising: a mapping table configuration module;
wherein the mapping table configuration module is configured to configure a task priority and a scheduling step-size corresponding to each task attribute, for the scheduling value calculation module to calculate the scheduling value of each task; and
the scheduling value calculation module is further configured to receive the task attribute of each task sent by the task receiving module, determine the task priority and the scheduling step-size from the mapping table configuration module according to the task attribute of each task, and determine the scheduling value of each task according to the scheduling step-size of each task.

14. A task scheduling device, comprising a processor and a memory, wherein the memory is configured to store computer programs, and the processor is configured to execute the computer programs to implement the method of any one of claims 1 to 10.

15. A computer-readable storage medium, configured to store computer programs which, when executed by at least one processor, implement the method of any one of claims 1 to 10.
